# EUROPÄISCHE PATENTANMELDUNG

(11) **EP 1 988 008 A1**
(43) Veröffentlichungstag der Anmeldung: **05.11.2008**
(21) Anmeldenummer: 08100119.0
(22) Anmeldetag: 04.01.2008
(51) Int. Cl.: B62K 7/04

(54) **Lastenfahrrad**

(30) Priorität: 04.05.2007 DE 202007000010 U
(71) Anmelder: Cycle-Union GmbH, 26135 Oldenburg (DE)
(72) Erfinder: Lönne, Severine, 26135 Oldenburg (DE)
(74) Vertreter: Meldau, Gustav

(57) **Zusammenfassung**

Die Erfindung betritt ein Lastenfahrrad (1) umfassend einen Rahmen (2) an dem ein lenkbares Vorderrad (3) und ein über ein Tretlager (4) antreibbares Hinterrad (5) angeordnet ist, und wobei sowohl über dem Vorderrad (3) als auch über dem Hinterrad (5) ein Träger (6, 8) für Gepäck vorgesehen ist, wobei der Vorderradträger (6) am Steuerrohr (7) und der Hinterradträger (8) an der Gabel (9) für das Hinterrad (5) befestigt ist, und an dem Vorderradträger (6) eine Stützeinrichtung (10) vorgesehen ist, die im Wesentlichen aus einer zur Längsachse des Lastenrades (1) unterhalb des Vorderradträgers (6) quer angeordneten Traverse (11) gebildet ist, die mittels Fußbetätigung gegen die Wirkung einer Feder (12) in die Stützstellung bzw. in die Betriebslage des Lastenfahrrades (1) bringbar ist. Hierbei wird die Stützeinrichtung (10) erfindungsgemäß aus einer telekopierbaren Rohreinheit (13) gebildet, wobei das als Teleskop ausgebildete Rohrgestell (14) gegen die Wirkung einer Feder (12) durch Fußbetätigung in eine sich selbst verriegelnde Stützstellung bringbar ist, die mittels einer handbetätigbaren Einrichtung (15) wieder für die Betriebslage des Lastenfahrrades (1) entriegelbar ist.

## Beschreibung

### Technisches Gebiet

Die Erfindung betrifft ein Lastenfahrrad umfassend einen Rahmen an dem ein lenkbares Vorderrad und ein über ein Tretlager antreibbares Hinterrad angeordnet ist, und wobei sowohl über dem Vorderrad als auch über dem Hinterrad ein Träger für Gepäck vorgesehen ist wobei der Vorderradträger am Steuerrohr und der Hinterradträger an der Gabel für das Hinterrad befestigt ist und an dem Vorderradträger eine Stützeinrichtung vorgesehen ist, die im Wesentlichen aus einer zur Längsachse des Lastenfahrrades unterhalb des Vorderradträgers quer angeordneten Traverse gebildet ist, die mittels Fußbetätigung gegen die Wirkung einer Feder in die Stützstellung bzw. in die Betriebslage des Lastenfahrrades bringbar ist.

### Stand der Technik

So ist aus dem Stand der Technik gemäß der EP 0 763 460 ein Lastenfahrrad bekannt, welches insbesondere für die Zustellung von Postsachen bestimmt ist. Das bekannte Lastenfahrrad zeichnet sich durch einen Vorderradträger sowie einen Hinterradträger aus, wobei unterhalb des Vorderradträgers eine Stützeinrichtung vorgesehen ist, die aus einer verschwenkbaren Quertraverse gebildet ist. Die Quertraverse ist unterhalb des Vorderradträgers schwenkbar an zwei Stützen gelagert und kann gegen die Wirkung einer Feder in die Stützstellung verschwenkt werden, so dass das Rad beidseits eine Stützauflage erfährt. Zur Bereitstellung des Lastenfahrrades für den Fahrbetrieb, muss mit dem Fuß die heruntergeschwenkte Quertraverse wie-der zurück verschwenkt werden, wobei hierzu die vorge-spannte Feder ein selbsttätiges Hochschwenken der Quertraverse bewirkt.

Bei diesem aus dem Stand der Technik bekannten Lastenfahrrad wird es als nachteilig angesehen, dass das Verbringen des Lastenfahrrades in die Stützstellung bzw. in die Betriebslage durch verschwenken der Quertraverse erfolgt. Hierbei ist es erforderlich, dass mit dem Fuß die hochgeschwenkte bzw. die heruntergeschwenkte Quertraverse gegen die Wirkung der Feder zu verschwenken ist, wobei insbesondere ein Abrutschen des Fußes bei beispielsweise feuchtem Wetter erfolgen kann. Zudem ergibt sich insbesondere beim Hochschwenken der Traverse, dass die Quertraverse nur bis zu einem bestimmten Niveau zurück schwenkt um insbesondere eine gewisse Tritthöhe beizubehalten, damit das Lastenfahrrad wieder mit dem Fuß in die Stützlage verbracht werden kann. Somit ergibt sich bei der schwenkbaren Ausführungsform eines so genannte angestellte Lage der Quertraverse, die beim Fahren des Lastenfahrrades ein Hindernis darstellt, weil durch die angestellte Quertraverse der Trittbereich eingeengt wird. Weiter wird es bei dem bekannten Lastenfahrrad als nachteilig angesehen, dass insbesondere das bekannte Lastenfahrrad eine verminderte Kurvengängigkeit aufweist, wobei zudem bei der bekannten Ausführung die Ladehöhe des Vorderradträgers begrenzt ist.

### Darstellung der Erfindung

Der Erfindung stellt sich somit das Problem ein Lastenfahrrad derart weiter zu bilden, welches die geschilderten Nachteile überwindet, wobei das Lastenfahrrad im Besonderen mit einer verbesserten Stützeinrichtung ausgestattet werden soll, die eine wesentlich einfachere Betätigung aufweist.

Die geschilderten Probleme werden durch die Merkmale des Anspruch 1 gelöst. Weiterbildende Ausführungen ergeben sich aus den abhängigen Unteransprüchen.

Das erfindungsgemäße Lastenfahrrad zeichnet sich dadurch aus, dass die Stützeinrichtung aus einer teleskopierbaren Rohreinheit gebildet ist, wobei das als Teleskop ausgebildete Rohrgestellt gegen die Wirkung einer Feder durch Fußbetätigung in eine sich selbst verriegelnde Stützstellung bringbar ist, die wiederum mittels einer handbetätigten Einrichtung wieder für die Betriebslage des Lastenfahrrades entriegelbar ist. Diese Ausbildung gewährleistet einen einfachen Einsatz der Stützeinrichtung durch eine einfache Fußbewegung, die ausschließlich durch Treten nach unten bestimmt ist, um das Lastenfahrrad in die Stützstellung zu versetzen. Bei dem erfindungsgemäßen Lastenfahrrad wird es auch als besonders vorteilhaft angesehen, dass durch absteigen zu der einen oder der anderen Seite diese leichte Fußbewegung durchgeführt werden kann, um das Lastenfahrrad in die Stützstellung zu verbringen. Soll das Lastenfahrrad wieder in die betriebsbereite Stellung verbracht werden, so kann mit einer einfachen Handbewegung die Ent-riegelung vorgenommen werden, so dass die Stützeinrichtung in Folge des verschiebbaren Teleskopes wieder entriegelt ist.

In Weiterbildung besteht die Rohreinheit einerseits aus zwei zueinander parallel, unterhalb des Vorderradträgers angeordneten Führungsrohren, in denen das aus ebenfalls zwei parallel angeordneten Teleskoprohren sowie sich zwischen den Teleskoprohren erstreckenden Quertraversen gebildete Rohrgestellt geführt ist. Somit ergibt sich ein verkantungsfreies Verschieben der Stützeinrichtung an dem Lastenfahrrad. Dabei wirkt zumindest mit einem der Teleskoprohre des Rohrgestells eine Feder zusammen, die in der Stützstellung auf Druck vorgespannt und in der Betriebslage entspannt ist. Es versteht sich nun von selbst, dass, wenn das Lastenfahrrad in die Stützstellung verbracht ist, die unter Druck vorgespannte Feder bei Entriegelung der Stützvorrichtung das als Teleskop ausgebildete Rohrgestell selbsttätig wieder zurückfährt bzw. einzieht.

In Weiterbildung sind die als Teleskope ausgebildeten Rohre in den Führungsrohren des Vorderradträgers jeweils in einer unteren und einer oberen Führungsmanschette verschiebbar gehalten. Zwischen der oberen und der unteren Führungsmanschette ist dabei eine das Teleskoprohr umgebende Spiralfeder angeordnet. Im Bereich der oberen Führungsmanschette ist die handbetätigbare Entriegelungseinrichtung angeordnet. Die Entriegelungseinrichtung als solches besteht aus einem quer zum Teleskoprohr angeordneten, mittels einer Feder vorgespannten Riegelbolzens, der in einer Führungshülse verschiebbar gehalten ist. Dabei drückt sich der vorgespannte Riegelbolzen selbsttätig in eine Verschlussstellung und zwar für die Betriebslage in eine untere Öffnung am Teleskoprohr und für die Stützstellung in eine obere Öffnung am Teleskoprohr. Hinsichtlich der Entriegelung ist mit dem vorgespannten Riegelbolzen ein Seilzug verbunden, der über ein am Lenkrad des Lastenfahrrades betätigbares Hebelelement verschiebbar ist. Wird also der Hebel im Bereich des Lenkrades verschwenkt, wird der Riegelbolzen gegen die Vorspannung der Feder aus der jeweiligen Öffnung am Teleskoprohr herausgezogen, so dass in Folge der Endriegelung sich das als Teleskop ausgebildete Rohrgestell selbsttätig in die Führungsrohre zurück zieht.

Nach einer besonderen Ausgestaltung, insbesondere des Rahmens, ist dieser aus einem geschwungenen, dicken Hauptrohr gebildet, an dessen einen Ende vorderradseitig ein unter einer Schräge verlaufendes, verlängertes Steuerrohr zur Aufnahme einer Gabel für ein kleines Vorderrad angeordnet ist. Diese Ausbildung gewährleistet insbesondere eine besondere Kurvengängigkeit des Lastenrades, wobei aber auch in Folge des sich ergebenen Bauraumes oberhalb des Vorderrades dieser als Gepäckraum nutzbar ist. An dem anderen Ende des Hauptrohres ist ein Sattelrohr angeordnet, wobei in der Verbindung von Hauptrohr und Sattelrohr das Tretlager für den Kettentrieb vorgesehen ist. Um insbesondere eine Steifung des Lastenfahrradrahmens zu bewirken, wird gemäß der Erfindung vorgesehen, dass neben dem Hauptrohr sowie dem Sattelrohr parallel verlaufende Versteifungsrohre verlaufen, die sich vom unteren Ansatz des Steu-errohres bis hin zur Hinterradgabel erstrecken, welche am Sattelrohr festgelegt ist. Diese Ausbildung des Rahmens begünstigt insbesondere einen besseren und tieferen Einstieg.

Nach einer besonders vorteilhaften Ausführungsform ist der Vorderradträger an dem Steuerrohr unter einer leicht nach vorne geneigten Schrägen befestigt. Hierbei ist der Träger aus einem geneigten Rechteckrohrgestell gebildet. Dieses umfasst einen unteren und einen oberen Rahmen, wobei an dem unteren Rahmen und hier an dem vorderen Quersteg des unteren Rahmens eine Stützstrebe angeordnet ist, die sich bis zum Steuerrohr erstreckt. Diese Stützstrebe unterteilt den Vorderradträger derart, dass jeweils neben der Stützstrebe entsprechend bemaßte Kisten auf dem Vorderradträger aufgesetzt werden können. An dem unteren Rahmen und hier an den Längsstreben des unteren Rahmens ist die Stützeinrichtung angeordnet, die aus den im Wesentlichen senkrecht angeordneten Führungsrohren für den Teleskop besteht. Dabei steht das einzelne Führungsrohr mit seinem oberen Ende mit dem freien Ende der Längsstrebe in Verbindung, wobei das Führungsrohr mit seinem unteren Ende mittels einer Pendelstütze gestützt wird, die wiederum am unteren Rahmen des Vorderradträgers festgelegt ist. Hierdurch ergibt sich eine stabile, fachwerksartige Festlegung insbesondere der Führungsrohre an der Unterseite des Vorderradträgers.

### Kurze Beschreibung der Abbildungen der Zeichnungen

Ein Ausführungsbeispiel der Erfindung ist in den Zeichnungen rein schematisch dargestellt und wird nachfolgend näher beschrieben. Es zeigt

Figur 1 Eine Seitenansicht des erfindungsgemäßen Lastenfahrrades;

Figur 2 Eine Frontansicht des als Teleskop ausgebildeten Rohrgestells;

Figur 3 Eine geschnittene Ansicht durch ein Führungsrohr mit Entriegelungseinrichtung sowie der darin angeordneten Stützeinrichtung;

Figur 4 Eine Detailansicht gemäß der Figur 3 insbesondere der Endriegelungs- bzw. Verriegelungseinrichtung an der Stützeinrichtung.

### Bester Weg zur Ausführung der Erfindung

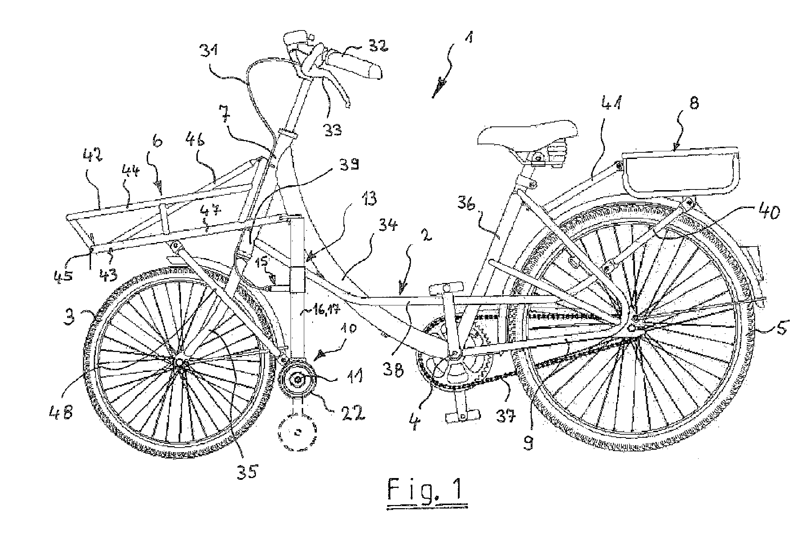

Die Figur 1 zeigt ein Lastenfahrrad 1, welches einen Rahmen 2 umfasst, an dem ein lenkbares Vorderrad 3 und ein über ein Tretlager 4 antreibbares Hinterrad 5 angeordnet ist. Wie aus der Seitenansicht der Figur 1 zu erkennen ist, ist sowohl über dem Vorderrad 3 als auch über dem Hinterrad 5 jeweils ein Träger für Gepäck vorgesehen. Der Vorderradträger 6 ist am Steuerrohr 7 und der Hinterradträger 8 ist an der Gabel 9 für das Hinterrad 5 befestigt. Wie aus der Figur weiter zu erkennen ist, ist an dem Vorderradträger 6 eine Stützeinrichtung 10 vorgesehen, die im wesentlichen aus einer zur Längsachse des Lastenfahrrades 1 unterhalb des Vorderradträgers 6 quer angeordneten Traverse 11 gebildet ist, die mittels Fußbetätigung gegen die Wirkung einer Feder 12 in die Stützlage - gestrichelt - bzw. in die Betriebs-lage - wie dargestellt - des Lastenfahrrades 1 bringbar ist.

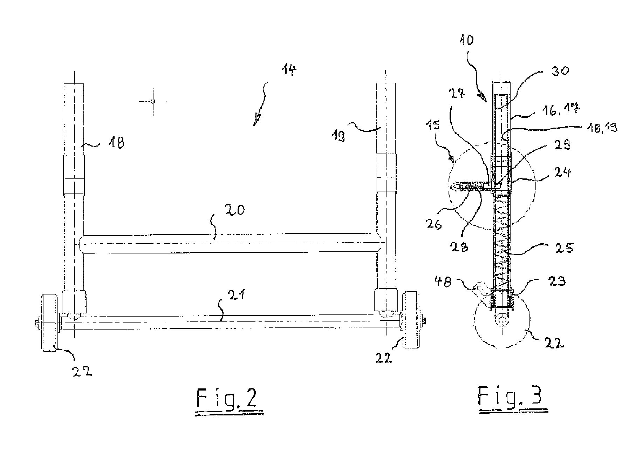

Wie aus der Figur 1 aber auch aus der Figur 2 und 3 in Zusammenschau zu erkennen ist, ist die Stützeinrichtung 10 aus einer teleskopierbaren Rohreinheit 13 gebildet, wobei das als Teleskop ausgebildete Rohrge-stell 14 gegen die Wirkung der Feder 12 durch Fußbetätigung in eine sich selbst verriegelnde Stützstellung - gestrichelt dargestellt - bringbar ist. Um die Stützeinrichtung 10 wieder in die dargestellte Situation der Figur 1 zu verbringen, kann dies mittels einer handbetätigbaren Einrichtung 15, die am Lenkrad vorgesehen ist, wieder für die Betriebslage des Lastenfahrrades 1 entriegelt werden. Die Endrieglung wird hierbei durch das an der Lenkstange 32 angeordnete Hebelelement 33 vorgenommen. Die Rohreinheit 13, wie es insbesondere in der Figur 2 und 3 dargestellt ist, besteht einerseits aus zwei zueinander parallel, unterhalb des Vorderradträgers 6 angeordneten Führungsrohren 16 und 17, in denen das Rohrgestell 14, welches aus ebenfalls zwei parallel angeordneten Teleskoprohren 18 und 19 sowie sich zwischen den Teleskoprohren 18 und 19 erstreckenden Quertraversen 20 und 21 besteht, geführt ist. Dabei ist die Quertraverse 20 zwischen den beiden Teleskoprohren 18 und 19 angeordnet, wobei die Quertraverse 21 an den freien Enden der beiden jeweiligen Teleskoprohre 18 und 19 angeordnet ist. Endseitig an der unteren Quertraverse 21 können Rollen oder Räder 22 vorgesehen sein, so dass auch in der Stützstellung noch eine leichte Verfahrbarkeit des Lastenfahrrades 1 gegeben ist.

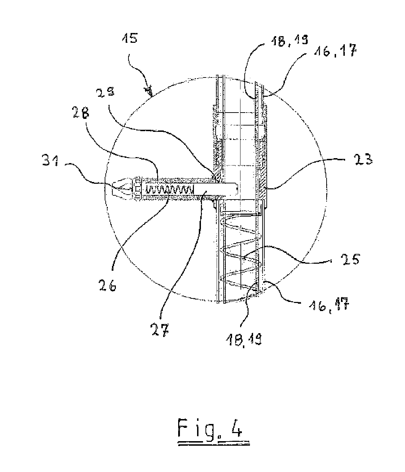

Gemäß der Figur 3 und 4 ist ersichtlich, dass zumindest mit einem der Teleskoprohre 18, 19 des Rohrgestelles 14 eine Feder 12 zusammen wirkt, die in der Stützstellung - gestrichelte Darstellung in der Figur 1 - auf Druck vorgespannt und in der Betriebslage - ebenfalls in der Figur 1 dargestellt - insoweit entspannt ist, dass sie das Rohrgestell 14 in der Lage hält, wie dies in der Figur 1 ersichtlich ist. In der Betriebslage wird durch die beidseits ange-ordneten Sperrreinrichtungen 15 sichergestellt, dass beim Überfahren von Bordsteinkanten oder Kopfsteinpflaster ein Wippen bzw. Flattern der unteren Quertraverse 21 an der Rohreinheit 13 unterbunden wird. Zudem wird gewährleistet, dass die Sperreinrichtungen 15 bei einem möglichen Bruch der Federn 25 die Quertraverse 21 für die Betriebslage sicher halten.

Wie insbesondere der Figur 2 in der geschnittenen Seitenansicht zu entnehmen ist, sind die als Teleskope ausgebildeten Teleskoprohre 18 und 19 in den Führungsrohren 16 und 17 des Vorderradträgers 6 jeweils in einer unteren und in einer oberen Führungsmanschette 23 und 24 verschiebbar gehalten. Zwischen der oberen und der unteren Führungsmanschette 23 und 24 ist eine das Teleskoprohr 18 bzw. 19 umgebende Spiralfeder 25 angeordnet. Wie sich insbesondere die Verriegelungssituation darstellt, so ist dies insbesondere in der exponierten Darstellung der Figur 4 besser zu erkennen, wo im Bereich der oberen Führungsmanschette 24 die handbetätigbare Entriegelungseinrichtung 15 angeordnet ist. Die Entriegelungseinrichtung 15 besteht hierbei aus einem sich quer zum Teleskoprohr 18, 19 erstreckenden mittels einer Spiralfeder 26 auf Druck vorgespannten Riegelbolzen 27, der in einer Führungshülse 28 verschiebbar gehalten ist. Der vorgespannte Riegelbolzen 27 drückt sich selbsttätig in die jeweilige Verschlussstellung und zwar für die Betriebslage in eine untere Öffnung 29 am Teleskoprohr 18, 19 und für die Stützstellung in eine obere Öffnung 30 ebenfalls am Teleskoprohr 18, 19, wie dies zu erkennen ist in der Figur 3.

Gemäß der Figur 1 wird nun ersichtlich, wie die Entriegelungseinrichtung 15 zu betätigen ist, wobei mit dem auf Druck vorgespannten Riegelbolzen 27 zur Entriegelung ein Seilzug 31 mit dem Riegelbolzen 27 zusammen wirkt, der über ein am Lenkrad 32 des Lastenfahrrades 1 handbetätigbares Hebelelement 33 so gespannt werden kann, dass sich der Riegelbolzen 27 aus der Öffnung 29 bzw. 20 zurück zieht und die Spiralfeder 25 ihre Wirkung entfalten kann und somit das Rohrgestell 14 drückt.

Wird das Lastenfahrrad 1 in die Stützstellung verbracht, so ist es lediglich erforderlich mittels Betätigung des Hebelelements 33 und mit dem Fuß einen leichten Druck auf die untere Quertraverse 21 auszuüben bis der auf Druck vorgespannte Riegelbolzen 27 in die obere Öffnung 30 einrastet, so dass das Rohrgestell 14 in seine Stützstellung verbracht ist. Durch Betätigen des Hebelelementes 33 mit der Hand erfolgt dann die selbsttätige Rückstellung des Rohrgestelles 14 für die Betriebslage, wobei in dieser Lage die Riegel-bolzen ebenfalls sich in die Sperrlage rasten.

Das Lastenfahrrad 1 als solches wird gebildet von einem Rahmen 2, der ein geschwungenes Hauptrohr 34 umfasst, an dessen einem Ende vorderseitig das unter einer Schrägen verlaufende, verlängerte Steuerrohr 7 angeordnet ist, welches insbesondere ermöglicht, dass eine Gabel 35 für ein Vorderrad 3 mit geringerem Durchmesser vorgesehen werden kann. Das Vorderrad 3 mit seinem geringeren Durchmesser ermöglicht insbesondere ein wendiges, kurvengängiges Fahren des Lastenfahrrades 1, sowie eine verbesserte Einsichtnahme auf die Straße.

In Weiterbildung, insbesondere des Rahmens 2, ist an dem anderen Ende des Hauptrohres 34 ein Sattelrohr 36 angeordnet, wobei in der Verbindung von Hauptrohr 34 und Sattelrohr 36 das Tretlager 4 für einen Kettentrieb 37 angeordnet ist. Wie insbesondere aus der Figur 1 in der Seitenansicht zu erkennen ist, sind neben dem Hauptrohr 34 sowie neben dem Sattelrohr 36 parallel verlaufende Versteifungsrohre 38 angeordnet, die sich vom unteren Ansatz 39 des Steuerrohres 7 bis hin zur Hinterradgabel 9 erstrecken, welche am Sattelrohr 36 festgelegt ist. Dabei stützt sich insbesondere der Hinterradträger 8 mit einer unteren Stütze 40 an dem Versteifungsrohr 38 endseitig ab, wobei ein oberes Stützrohr 41 im oberen Bereich der Hinterradgabel 9 festgelegt ist.

Wie die Figur 1 weiter erkennen lässt, ist an dem Steuerrohr 7 der Vorderradträger 6 in einer leicht nach vorne geneigten Stellung festgelegt, wobei hier der Vorderradträger 6 ein Rechteckrohrgestell 42 umfasst. Das Rechteckrohrgestell 42 umfasst einen unteren Rahmen 43 und einen oberen Rahmen 44, wobei mit dem unteren Rahmen 43 und hier mit dem vorderen Quersteg 45 des unteren Rahmens 43 dieser über eine Stützstrebe 46 am Steuerrohr 7 festgelegt ist. Dies erlaubt insbesondere eine weit auskragende Lage des Vorderradträgers 6 über den Raddurchmesser des Vorderrades 3 hinaus. Somit wird einmal eine weite Erstreckung nach vorne und zur Seite für den Vorderradträger 6 ermöglicht, wobei durch den kleinen Vorderraddurchmesser auch eine hohe Beladung des Vorderradträgers möglich ist ohne dass dadurch eine Behinderung für den Fahrer gegeben ist. Darüber hinaus ergibt sich eine bessere Einsicht der Straße beziehungsweise die Erkennbarkeit von Hindernissen vor dem Fahrrad stellt sich positiver dar.

Wie aus der Figur 1 weiter zu erkennen ist, ist an dem unteren Rahmen 43 und hier an den Längsstreben 47 des Rahmens 43 die Stützeinrichtung 10 angeordnet, die aus den im wesentlichen senkrecht angeordneten Führungsrohren 16 und 17 besteht. Wie dargestellt, ist das einzelne Führungsrohr 16 bzw. 17 mit seinem oberen Ende mit dem freien Ende der Längsstrebe 47 verbunden, wobei das untere Ende des einzelnen Führungsrohres 16 bzw. 17 mit einer Pendelstütze 48 verbunden ist, die wiederum am unteren am unteren Rahmen 43 des Vorderradträgers 6 festgelegt ist. Infolge dieser Anordnung ergibt sich eine stabilisierende Einbindung der Stützeinrichtung 10 an dem Vorderradträger 6 und hiermit an dem Lastenfahrrad 1.

### Bezugszeichenliste

- 1.: Lastenfahrrad
- 2.: Rahmen
- 3.: Vorderrad (lenkbar)
- 4.: Tretlager
- 5.: Hinterrad (antreibbar)
- 6.: Vorderradträger
- 7.: Steuerrohr
- 8.: Hinterradträger
- 9.: Gabel
- 10.: Stützeinrichtung
- 11.: Traverse
- 12.: Feder
- 13.: Rohreinheit
- 14.: Rohrgestell in Teleskopform
- 15.: Entriegelungseinrichtung (handbetäigbar)
- 16.: Führungsrohr
- 17.: Führungsrohr
- 18.: Teleskoprohr
- 19.: Teleskoprohr
- 20.: Quertraverse (oben)
- 21.: Quertraverse (unten)
- 22.: Rolle/Räder
- 23.: Führungsmanschette (unten)
- 24.: Führungsmanschette (oben)
- 25.: Spiralfeder (Teleskop)
- 26.: Spiralfeder (Bolzen)
- 27.: Riegelbolzen
- 28.: Führungshülse
- 29.: Öffnung (unten)
- 30.: Öffnung (oben)
- 31.: Seilzug
- 32.: Lenkrad
- 33.: Hebelelement (handbetätigbar)
- 34.: Hauptrohr
- 35.: Gabel
- 36.: Sattelrohr
- 37.: Kettentrieb
- 38.: Versteifungsrohre
- 39.: Ansatz
- 40.: Untere Stütze (Träger)
- 41.: Obere Stütze (Träger)
- 42.: Rechteckrohrgestell (Träger vorn)
- 43.: Unterer Rahmen
- 44.: Oberer Rahmen
- 45.: Quersteg
- 46.: Stützstrebe
- 47.: Längsstrebe
- 48.: Pendelstütze

## Patentansprüche

1. Lastenfahrrad (1) umfassend einen Rahmen (2) an dem ein lenkbares Vorderrad (3) und ein über ein Tretlager (4) antreibbares Hinterrad (5) angeordnet ist, und wobei sowohl über dem Vorderrad (3) als auch über dem Hinterrad (5) ein Träger (6, 8) für Gepäck vorgesehen ist, wobei der Vorderradträger (6) am Steuerrohr (7) und der Hinterradträger (8) an der Gabel (9) für das Hinterrad (5) befestigt ist, und an dem Vorderradträger (6) eine Stützeinrichtung (10) vorgesehen ist, die im Wesentlichen aus einer zur Längsachse des Lastenrades (1) unterhalb des Vorderradträgers (6) quer angeordneten Traverse (11) gebildet ist, die mittels Fußbetätigung gegen die Wirkung einer Feder (12) in die Stützstellung bzw. in die Betriebslage des Lastenfahrrades (1) bringbar ist, **dadurch gekennzeichnet, dass** die Stützeinrichtung (10) aus einer telekopierbaren Rohreinheit (13) gebildet ist, wobei das als Teleskop ausgebildete Rohrgestell (14) gegen die Wirkung einer Feder (12) durch Fußbetätigung in eine sich selbst verriegelnde Stützstellung bringbar ist, die mittels einer handbetätigbaren Einrichtung (15) wieder für die Betriebslage des Lastenfahrrades (1) entriegelbar ist.

2. Lastenfahrrad nach Anspruch 1, **dadurch gekennzeichnet, dass** die Rohreinheit (13) einerseits aus zwei zueinander parallel unterhalb des Vorderradträgers (6) angeordneten Führungsrohren (16, 17) besteht, in denen das aus ebenfalls zwei parallel angeordneten Teleskoprohren (18, 19) sowie sich zwischen den Teleskoprohren (18, 19) erstreckenden Quertraversen (20, 21) gebildete Rohrgestell (14) geführt ist.

3. Lastenfahrrad nach Anspruch 1 und 2, **dadurch gekennzeichnet, dass** wenigstens mit einem der Teleskoprohre (18, 19) des Rohrgestells (14) eine Feder (12) zusammenwirkt, die in der Stützstellung auf Druck vorgespannt und in der Betriebslage entspannt ist.

4. Lastenfahrrad nach Anspruch 1 bis 3, **dadurch gekennzeichnet, dass** die Teleskoprohre (18, 19) in den Führungsrohren (16, 17) des Vorderradträgers (6) jeweils in einer unteren und in einer oberen Führungsmanschette (23, 24) verschiebbar gehalten sind.

5. Lastenfahrrad nach Anspruch 1 bis 4, **dadurch gekennzeichnet, dass** zwischen der oberen und der unteren Führungsmanschette (23) und (24) eine das Teleskoprohr (18, 19) umgebene Spiralfeder (25) angeordnet ist.

6. Lastenfahrrad nach Anspruch 1 bis 5, **dadurch gekennzeichnet, dass** im Bereich der oberen Führungsmanschette (24) die handbetätigbare Ent-riegelungseinrichtung (15) angeordnet ist.

7. Lastenfahrrad nach Anspruch 1 bis 6, **dadurch gekennzeichnet, dass** die Entriegelungseinrichtung (15) aus einem quer zum Teleskoprohr (18, 19) angeordnetem mittels einer Spiralfeder (26) auf Druck vorgespannten Riegelbolzen (27) besteht, der in einer Führungshülse (28) verschiebbar gehalten ist.

8. Lastenfahrrad nach Anspruch 1 bis 7, **dadurch gekennzeichnet, dass** sich der auf Druck vorgespannte Riegelbolzen (27) selbsttätig in eine Verschlussstellung drückt und zwar für die Betriebslage in eine untere Öffnung (29) am Teleskoprohr (18, 19) und für die Stützstellung in eine obere Öffnung (30) am Teleskoprohr (18, 19).

9. Lastenfahrrad nach Anspruch 1 bis 8, **dadurch gekennzeichnet, dass** mit dem auf Druck vorgespannten Riegelbolzen (27) zur Entriegelung des vorgespannten Riegelbolzens (27) ein Seilzug (31) zusammenwirkt, der über einen am Lenkrad (32) des Lastenfahrrades (1) handbetätigbares Hebelelement (33) spannbar ist.

10. Lastenfahrrad nach einem oder mehreren der vorhergehenden Ansprüche 1 bis 9, **dadurch gekennzeichnet, dass** der Rahmen (2) aus einem geschwungenen dicken Hauptrohr (34) gebildet ist, an dessen einem Ende vorderradseitig ein unter einer Schrägen verlaufendes verlängertes Streuerrohr (7) zur Aufnahme einer Gabel (35) für ein Vorderrad (3) mit geringerem Durchmesser angeordnet ist.

11. Lastenfahrrad nach Anspruch 10, **dadurch gekennzeichnet, dass** an dem anderen Ende des Hauptrohres (34) ein Sattelrohr (36) angeordnet ist, wobei in der Verbindung von Hauptrohr (34) und Sattelrohr (36) das Tretlager (4) für den Kettentrieb (37) angeordnet ist.

12. Lastenfahrrad nach Anspruch 10 und 11, **dadurch gekennzeichnet, dass** neben dem Hauptrohr (34) sowie dem Sattelrohr (36) parallel verlaufende Versteifungsrohre (38) angeordnet sind, die sich vom unteren Ansatz (39) des Steuerrohres (7) bis hin zur Hinterradgabel (9) erstrecken, welche am Sattelrohr (36) festgelegt ist.

13. Lastenfahrrad nach Anspruch 10 bis 12, **dadurch gekennzeichnet, dass** an dem Steuerrohr (7) der Vorderradträger (6) befestigt ist, der aus einem leicht nach vorne geneigten Rechteckrohrge-stell (42) gebildet ist.

14. Lastenfahrrad nach Anspruch 10 bis 13, **dadurch gekennzeichnet, dass** das Rechteckrohrgestell (42) einen untern und einen oberen Rahmen (43) und (44) umfasst, wobei zwischen dem unteren Rahmen (43) und hier mit dem vorderen Quersteg (45) des unteren Rahmens (43) und dem Steuerrohr (7) eine Stützstrebe (46) angeordnet ist.

15. Lastenfahrrad nach Anspruch 10 bis 14, **dadurch gekennzeichnet, dass** an dem unteren Rahmen (43) und hier an den Längsstreben (47) des Rahmens (43) die Stützeinrichtung (10) angeordnet ist, die aus den im Wesentlichen senkrecht angeordneten Führungsrohren (16, 17) besteht, wobei das einzelne Führungsrohr (16, 17) mit seinem oberen Ende mit dem freien Ende der Längsstrebe (47) verbunden ist, und das Führungsrohr (16, 17) mit seinem unteren Ende mit einer Pendelstütze (48) verbunden ist, die wiederum am unteren Rahmen (43) des Vorderradträgers (6) festgelegt ist.
